(19)

Europäisches
Patentamt
European
Patent Office
Office européen
des brevets

(11) **EP 1 370 468 B1**

(12) **EUROPEAN PATENT SPECIFICATION**

(45) Date of publication and mention
of the grant of the patent:
**24.01.2007  Bulletin 2007/04**

(51) Int Cl.:
**B65D 5/04** *(2006.01)*    **B62D 6/04** *(2006.01)*

(21) Application number: **02720114.4**

(22) Date of filing: **20.03.2002**

(86) International application number:
**PCT/GB2002/001342**

(87) International publication number:
**WO 2002/074638 (26.09.2002 Gazette 2002/39)**

(54) **STEERING CONTROL DURING SPLIT-MU ABS-BRAKING**

LENKREGELUNG BEIM MY-SPLIT-ABS-BREMSEN

COMMANDE DE BRAQUAGE LORS DU FREINAGE ABS AVEC COEFFICIENT DE FROTTEMENT

(84) Designated Contracting States:
**AT BE CH CY DE DK ES FI FR GB GR IE IT LI LU
MC NL PT SE TR**

(30) Priority: **20.03.2001  GB 0106925**

(43) Date of publication of application:
**17.12.2003  Bulletin 2003/51**

(73) Proprietor: **Lucas Industries Limited
West Midlands B90 4LA (GB)**

(72) Inventors:
• **BARTON, Andrew, Dennis
Balsall Common,
Coventry CV7 9PR (GB)**
• **FARRELLY, James, Owen, Patrick
Kenilworth,
Warwickshire CV8 2HE (GB)**
• **TUCKER, Mark, Richard
Lutterworth,
Leicestershire, LE17 4EP (GB)**

• **MILBOURN, Edward, John
Coventry, CV3 1FS (GB)**
• **BAYNES, Michael, John
Warwickshire CV32 5DA (GB)**

(74) Representative: **W.P. Thompson & Co.
Coopers Building,
Church Street
Liverpool L1 3AB (GB)**

(56) References cited:
EP-A- 1 209 053          DE-A- 19 751 227
DE-C- 19 650 475         US-A- 6 154 696
US-A1- 2002 030 407

• **PATENT ABSTRACTS OF JAPAN vol. 1999, no.
11, 30 September 1999 (1999-09-30) & JP 11
152055 A (KOYO SEIKO CO LTD), 8 June 1999
(1999-06-08)**

EP 1 370 468 B1

**Description**

The present invention is concerned with the steering of a vehicle having an electrically assisted steering system (EAS) when running in the situation of ABS split mu operation, where the nearside and offside wheels of the vehicle are running respectively on relatively high mu and relatively low mu surfaces, or vice versa, resulting in the necessity for asymmetric brake force manoeuvres.

Electric assist steering systems are well known in the art. Electric assist steering systems that use, for example, a rack and pinion gear set to couple the steering column to the steered axle, provide power assist by using an electric motor to either apply rotary force to a steering shaft connected to a pinion gear, or apply linear force to a steering member having rack teeth thereon. The electric motor in such systems is typically controlled in response to (a) driver's applied torque to the steering wheel, and (b) sensed vehicle speed.

Other known electric assist steering systems include electro-hydraulic systems in which the power assist is provided by hydraulic means under at least partial control of an electronic control system.

In the latter conditions, where a split mu braking operation is taking place, the unbalanced braking torques which occur can adversely affect the vehicle stability and tend to cause the vehicle to spin.

There is known from JP-A-11 152055 a steering device for a vehicle which seeks to prevent vehicle instability by outputting both control signals representative of the force required for steering and the vehicle braking force according to the steering dependency corresponding to the priority of steering in relation to braking operation in a course change of the vehicle. Vehicle speed and steering torque are determined by speed and torque sensors as the variables having an influence on unstable vehicle steering behavior, steering angle change rate, wheel speed rotation and the friction coefficient between the wheels and the road surface are also determined. A controller stores the relation between the aforegoing variables and a requirement to prevent instability of the vehicle and judges the presence of a necessity for instability prevention from the values of the variables before the vehicle behavior become unstable. It then stores and controls the relation between the variable, the steering dependency, the force required for steering and the brake force whereby, according to this document, the vehicle behavior can be stabilized by a driver's own steering.

There is known from DE-A-196 50 475C a vehicle steering by wire system that senses forces acting upon steered vehicle wheels to enable a control device to record introductions of disturbance variables from the road through the steered vehicle wheels without any time delay, and examine its plausibility by means of other input quantities. This permits a multi-redundant system, where the redundant signals or the redundant information determined from the signals originate from differently structured and arranged sensors. There is also the possibility that, as a function of forces active on the steered vehicles wheels, the control device controls or influences a manual force actuator without delay. This has the purpose of simulating or modulating as a function of the respective driving conditions, an actuating force on the manual steering device or on the manual steering wheel which can be felt by the driver. The system utilizes direct force sensing at the steered wheels (instrumented hub carrier) and is primarily concerned with how to control the steered wheels and generate steering feedback representative of the sensed forces.

There is known from US-A-6154 696 a method of cancelling out steering variations caused through torque steer i.e. steering torques generated as power is applied via the vehicle gear train which feed back into the steering system by virtue of having unbalanced geometry within the drive train and suspension system. The proposal hinges on providing a torque difference signal generated from a torque splitter control unit. It is then this signal that is used to provide a related steering compensation torque. Compensating this basic adjustment with a reactive steering component that is added to the torque difference signal makes a further refinement. The actual derivation of this signal is not described, it is only stated that this signal is obtained by looking at steering speed lateral acceleration, vehicle speed and yaw rate and that some comparison of these values is made against reference values.

There is known from DE-A-197 51 227A a wheel steering system that provides a steer torque compensation based on a yaw parameter where said yaw parameter is operative when a braking parameter detects that it is operating on a split mu surface and where further the yaw parameter is detected dependent upon brake pressure differential or lateral acceleration. An auxiliary drive superimposes the steering motion initiated by the driver of the vehicle and the motion initiated by an actuator to generate the steering motion of the steerable wheel. A yaw parameter representing the yawing motion of the vehicle is detected, and a control signal is calculated when a predetermined running condition prevails, dependent on the detected yaw parameter. The actuator is then controlled by the generated control signal to initiate the motion. A braking parameter representing the braking condition of the vehicle is also detected, and the existence of the running condition is determined dependent on this detected braking parameter. Active steering intervention is switched in only when an external disturbance of vehicle motion is detected.

This system establishes a steering angle correction that is simply overlaid directly onto driver input torque. The overlaid angle is based on the integral of yaw rate error to control a target yaw rate. No adjustment of the self-centering position of the steering takes place.

There is known from EP-A-1209 053 a steering system that involves the use of yaw moment estimation, demand steer angle and steering control to produce a demand steer angle. Yaw moment is calculated from differences in braking force in a known manner. A control system provides a corrective steering torque based upon a yaw moment derived from the longitudinal braking force and including the measurement of brake pressures. This system does not involve arranging for the self-centering position of the steering to be shifted.

It is one object of the present invention to provide an improved means by which to maintain the vehicle stable and controllable by way of steering intervention when unbalanced braking torques would otherwise tend to cause the vehicle to spin.

In accordance with the invention, there is provided a vehicle stability compensation system which is arranged to adjust dynamically the self-centering position and the steering feel of the steering system during split mu braking operation comprising

(a) means for establishing at least one operational variable representing a corrective steer angle for the vehicle and hence representing a target self-centering position;

(b) a driver feedback controller which takes one of said operational variables, or the sum of two or more of the variables, representative of target self-centering position and subtracts therefrom the actual steering angle to derive a target self-centering error; and

(c) gain means for establishing a torque demand proportional to the target self-centering error which is added to the EAS assistance torque to shift the self-centering position so as to encourage the driver to move the steering wheel such as to reduce the target self-centering error to zero for maintaining the vehicle stable and controllable.

One possible operational variable representing a corrective steer angle is the braking yaw moment. This can be established, for example by generating and subtracting from each other, estimates of the brake pressures at the front left and front right wheels, multiplying the difference by a constant to give the difference in brake forces for the front wheels, and dividing the result by the track width of the vehicle. The braking yaw moment is multiplied by a gain to give the corrective steer angle.

A second possible operational variable representing a corrective steer angle is yaw oscillation. This can be established, for example, by inverting a yaw rate signal, multiplying this by a gain and using the result as a feedback signal providing yaw oscillation correction.

A third possible operational variable representing a corrective steering angle is lateral drift correction. This can be established, for example, by inverting a vehicle lateral acceleration signal and applying proportional plus integral compensation to provide the lateral drift correction.

Preferably, the driver feedback controller takes one of said operational variables, or the sum of two or more of the variables, subtracts them from the actual steering angle, and adds the result to the EAS assistance torque, advantageously by way of a gain and a limiter. Steering velocity feedback can be applied to prevent the shift resulting in underdamped steering oscillations. Preferably, the driver feedback is phased out at lower speeds to avoid impeding low speed driver manoeuvres.

In accordance with a further aspect of this invention, there is provided a vehicle stability compensation system which is arranged to determine the dynamic state of the vehicle through assessment of the vehicle stability and/or the driver compliance wherein at least one controlled function of the brake control system is adjusted in dependence upon the dynamic state so as to maximise the available braking utilisation available. The features of subsidiary claims 2 to 42 are also applicable to the latter aspect of the invention, both singly and in combinations.

The invention is described further hereinafter, by way of example only, with reference to the accompanying drawings, in which:-

Fig. 1 is a block diagram showing generation of steer angle demand;
Fig. 2 illustrates yaw moment estimation from brake pressure;
Fig. 3 illustrates yaw moment estimation from front axle brake pressures;
Fig. 4 illustrates yaw moment estimation through a vehicle model and feedback loop;
Fig. 5 illustrates steer angle demand from yaw moment estimate;
Fig. 6 illustrates steering angle demand from yaw rate oscillation;
Fig. 7 illustrates yaw compensation by steering velocity control;
Fig. 8 illustrates lateral drift compensation;
Fig. 9 illustrates lateral drift compensation from lateral acceleration;
Fig. 10 illustrates steering position control to demand steer angle;
Fig. 11 illustrates driver compliance rating from driver torque;
Fig. 12 illustrates driver compliance rating from steer angle error;
Fig. 13 is a "top level" block diagram illustrating a system embodying the invention is a whole;
Fig. 14 illustrates enabling and scaling;
Fig. 15 illustrates torque demand;

Fig. 16 illustrates vehicle stability rating from yaw rate;

Fig. 17 illustrates vehicle stability rating from steer angle;

Fig. 18 illustrates ABS front axle yaw control on split mu;

Fig. 19 illustrates ABS with driver compliance feedback;

Fig. 20 illustrates rear wheel pressure control during split mu braking;

Fig. 21 illustrates load transfer estimation;

Fig. 22 illustrates demand pressure calculation;

Fig. 23 is an overview of a basic embodiment of a driver feedback controller embodying the present invention which uses any of three corrective steer angles to establish a control signal which is added to the electrically assisted steering (EAS) assistance torque;

Fig. 24 shows the use of a multiplier in connection with the generation of driver compliance;

Fig. 25 shows diagrams of elements for use in the establishment of vehicle stability;

Fig. 26 is a block diagram illustrating a number of discrete control operations; and

Fig. 27 comprises a number of curves illustrating ABS rear axle behaviour.

The present technique involves the generation of one or more variables representing corrective steer angle demands for the vehicle which is/are supplied to a "driver feedback" controller to produce an output signal for modifying the EAS assistance torque.

**Steer Angle Demand**

The operational variables required to produce the steer angle demand are:

a) Yaw Moment Estimate
b) Yaw Rate Feedback or "oscillation"; and
c) Lateral Drift Compensation.

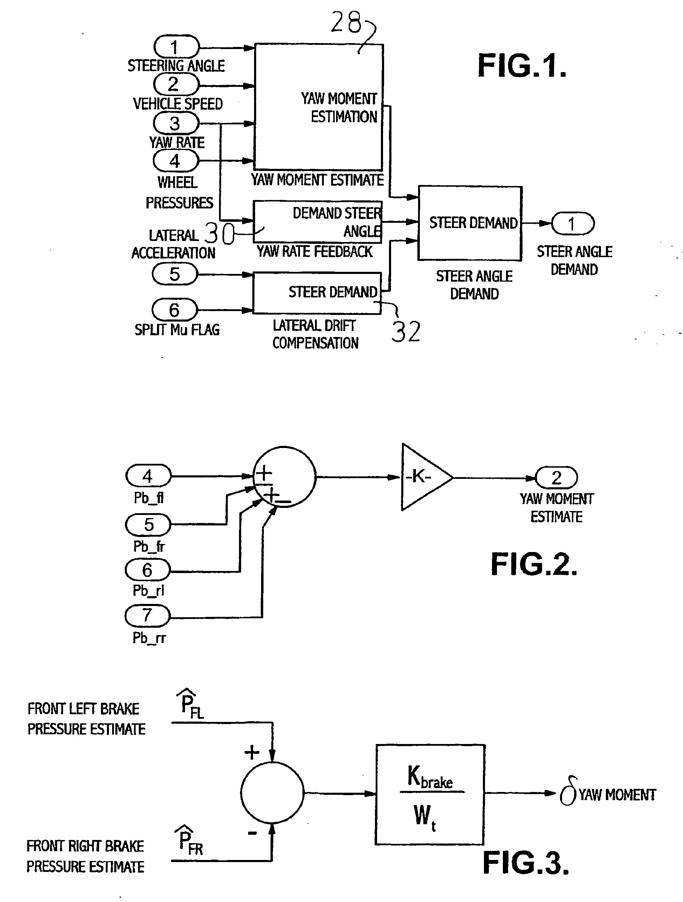

An example of the steer angle demand process is illustrated in Fig. 1 which shows steer angle demand based on various signals, these demand steer angles then being combined to give an overall demand steer angle, taking into account the various possible components.

The establishment of the various variables is now described separately.

**(a) Yaw Moment Estimation 28**

**(1) Yaw Moment Estimation from Brake Pressure**

Measured or Estimated Wheel pressures are compared to give the total difference in applied brake pressure across the vehicle. This is multiplied by a gain to give an estimate of the yaw moment across the vehicle. The gain is made up of estimated brake gain (brake pressure to longitudinal tyre force) and vehicle track width. (see Fig.2)

**(2) Yaw Moment Estimation from different pressure across front axle**

Referring to Fig. 3, the ABS algorithm contained within the ABS software generates a flag to indicate that split mu braking is taking place. It also generates estimates of brake pressure at each front wheel. These front left and right brake pressure estimates (PFL, PFR) are used to compute a brake yaw moment, and hence a corrective steering angle demand. The difference in brake pressure estimates for the front wheels is multiplied by a constant K brake to give the difference in brake forces for the front wheels. This difference in forces is divided by the track width WT to give the braking yaw moment. The braking yaw moment is multiplied by a gain to give the corrective steer angle. It is an absolute angle not a torque.

**(3) Yaw Moment Estimation through vehicle model and feedback loop**

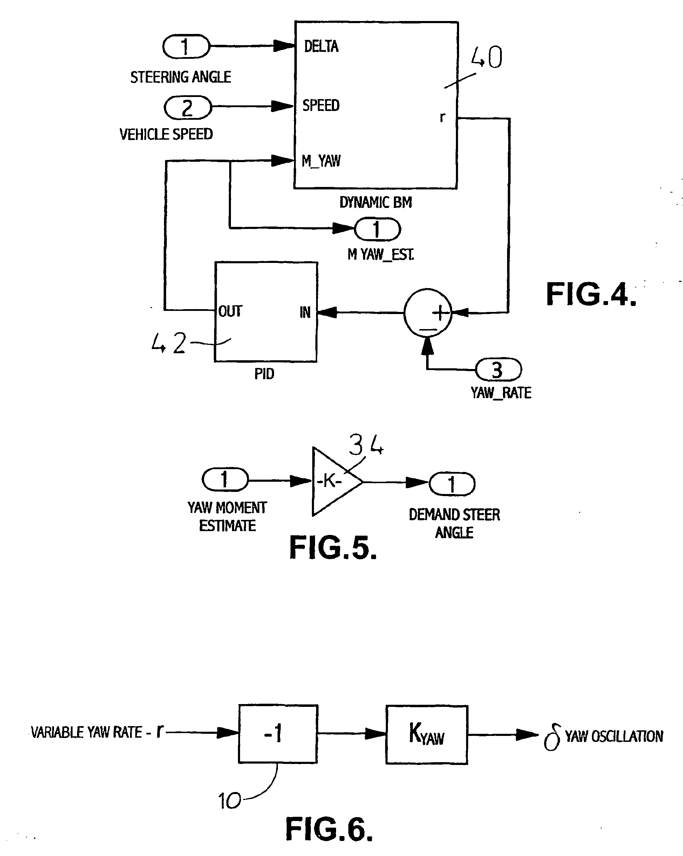

This is illustrated in Fig. 4 and uses a dynamic block BM which implements the following vehicle model 40:

Lateral Dynamics:

**Lateral Dynamics:**

$$M\dot{v} = \left(\frac{-2(C_{\alpha f} + C_{\alpha r})}{U}\right)v - \left(\frac{2(aC_{\alpha f} + bC_{\alpha r})}{U} + U\right)r + 2C_{\alpha f}\delta$$

**Yaw Dynamics:**

$$I_{zz}\dot{r} = \left(\frac{-2(aC_{\alpha f} + bC_{\alpha r})}{U}\right)v - \left(\frac{2(a^2C_{\alpha f} + b^2C_{\alpha r})}{U}\right)r + 2aC_{\alpha f}\delta + M_\psi$$

Where

$v =$      Lateral Velocity (m/s) - state
$r =$      Yaw Rate (rad/s) - state
$\delta =$      Steer Angle of Front Wheels (rad) - input
$M_\psi =$      Disturbance Yaw Moment (Nm) - input
$C_{\alpha f} =$      Front Single Wheel Cornering Stiffness (N/rad)
$C_{\alpha r} =$      Rear Single Wheel Cornering Stiffness (N/rad)
$a =$      Distance Front Axle to Centre of Gravity (m)
$b =$      Distance Rear Axle to Centre of Gravity (m)
$M =$      Vehicle Total Mass (kg)
$I_{zz} =$      Vehicle Yaw Inertia (kg/m$^2$)
$U =$      Vehicle Speed (mls)

This is a well-recognised two degree-of-freedom vehicle model with the addition of a direct yaw moment term in the yaw dynamics formula. This term describes any additional yaw moment disturbance not accounted for by the steering input. The model 40 is driven by inputs of steering angle (at the road wheels), yaw moment disturbance input and vehicle speed. The output is estimated yaw rate of the model.

The output of the vehicle model 40 is compared to the actual yaw rate of the vehicle to give a yaw rate error. This error is processed by a compensator block 42 (in this case a PID compensator) which drives the yaw moment input of the vehicle model in an attempt to minimise the yaw rate error. This yaw moment estimate is the output used for subsequent control.

The output of the circuit of Fig. 4 and the outputs of the other optional brake pressure yaw moment functions are further led to the circuit of Fig. 5 to produce steer angle demand as described further hereinafter. As shown in Fig. 5 the demand steer angle is generated by multiplying the chosen yaw moment estimate by a gain 34.

### (b) Yaw Rate Feedback 30

### (I) Yaw Rate oscillation

Referring to Fig. 6, the yaw dynamics of a vehicle in a split mu stop are different from normal running. The vehicle tends to yaw at a lower frequency of about 1Hz. This change in yaw dynamics is hard for the driver to control. The yaw rate signal r is inverted at 10, and multiplied by a gain Kyaw, and used as a feedback signal to generate an additional corrective steering angle demand to assist the driver in controlling the yaw dynamics.

### (2) Yaw compensation by steering velocity control

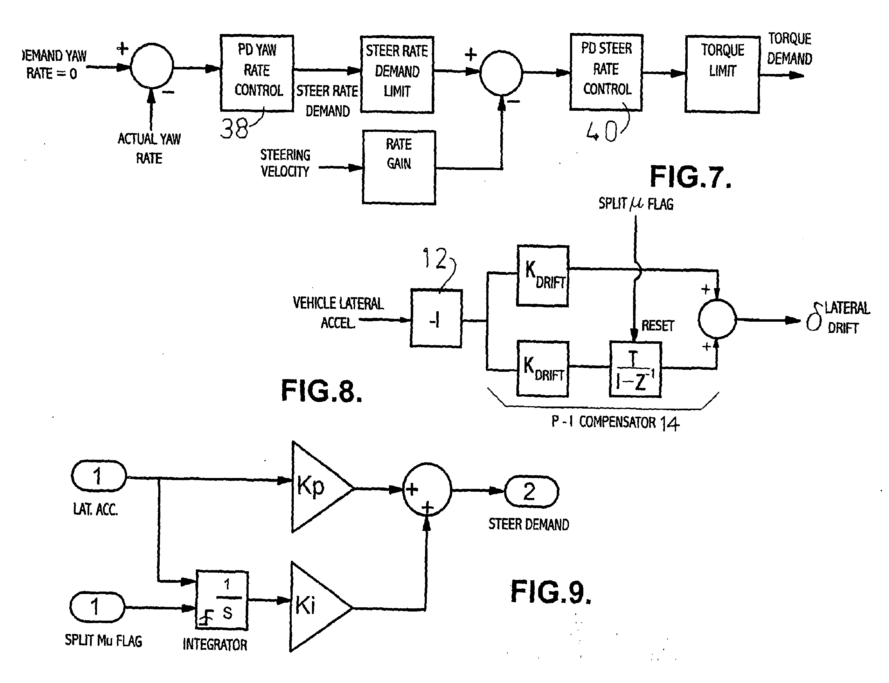

The aim of the closed loop steering wheel velocity controller, shown in Fig. 7 is to attempt to match the yaw rate of the front road wheels with the yaw rate of the vehicle but the opposite sign. This has the effect of causing the vehicle to seemingly pivot about the front wheels.

The controller assumes that the driver is attempting to reduce the yaw rate of the vehicle to zero and assists the driver in achieving this. In the first element, a PD controller 38 is implemented on the yaw rate error signal to generate a steering rate demand. This is compared with a scaled version of the handwheel velocity to produce an error signal. The final PD controller 40 then attempts to move the handwheel with the desired direction and velocity. A limit prevents the controller applying torques that may lead to excessive handwheel velocities.

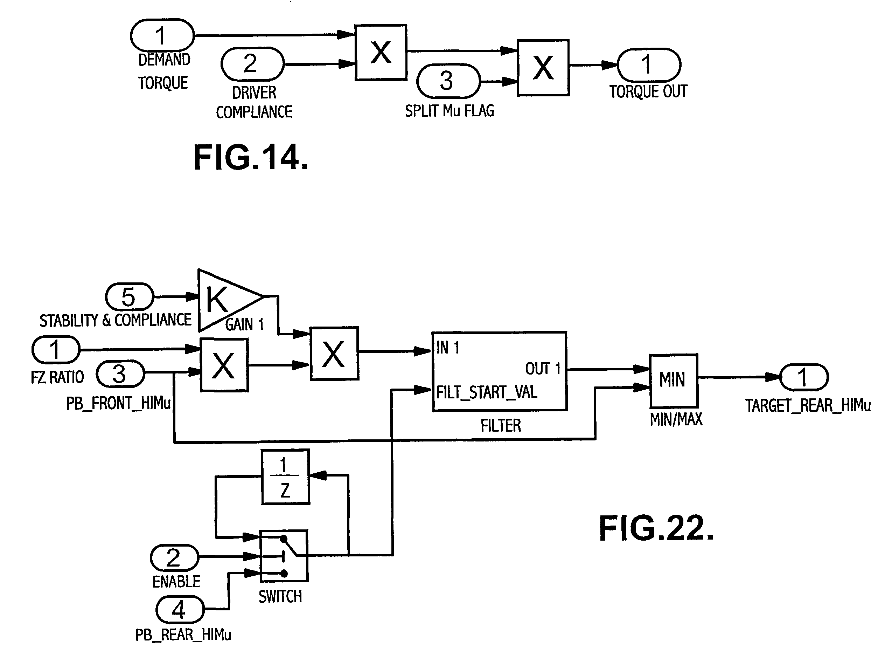

The output of the control routine would be fed for the present purposes into a multiplier at a point immediately before the split mu flag switch of Fig. 14 and 23, described hereinafter.

### (c) Lateral Drift Compensation 32

Reference is first made to Fig. 8. To prevent the vehicle drifting off the split mu, the vehicle must adopt a yaw angle to balance the slip angle generated by the yaw moment correction steering. This is achieved by using integral feedback of lateral acceleration where the lateral acceleration is inverted at 12 and passed through proportional plus integral compensator 14 to compute a further additive corrective steering angle demand. Thus, as illustrated in Fig. 9, the vehicle lateral acceleration signal is multiplied by a gain to give a proportional steer demand signal. The lateral acceleration signal is also integrated, where the setting of the split mu flag resets the integrator, and multiplied by a gain. The proportional and integral steer demands are summed to generate the output steer demand.

### Steering Position Control

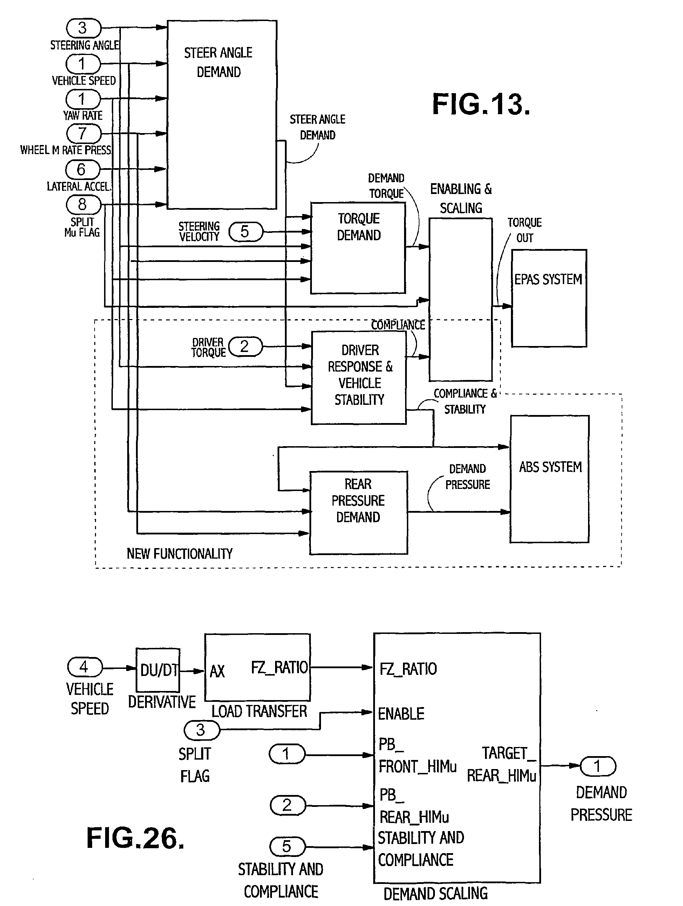

The output of the steer angle demand section of the controller is fed into the steering position control section which corresponds to the central portion of the system of Figs. 13 and 23, described hereinafter. The steering position controller accepts the steer angle demand and an error is formed with the actual steer angle, this being adjusted by a gain and then limited before a steering velocity dependant damping function is subtracted from it. This scaled and damped steering position error is then multiplied by a filtered vehicle velocity value.

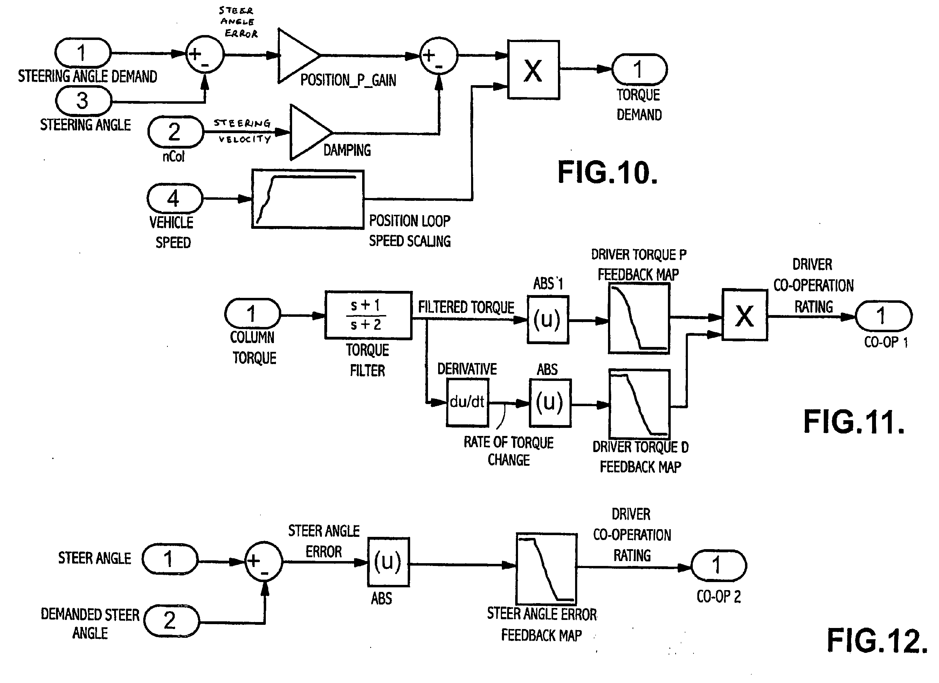

Thus, as shown in Fig. 10, the chosen combination of demand steer angle signals is compared to the measured steer angle to give a steer angle error. Steer angle error is multiplied by a gain to give a demand steering torque. Steering velocity is multiplied by a gain to give a damping torque that is subtracted from the demand steering torque. Vehicle speed is mapped against a look up table to provide a scaling factor to fade out the torque demand at low speeds. This is achieved by multiplying the damped steer demand torque by the scaling factor.

### Driver Feedback Controller

A first, simple driver feedback controller is now described with reference to Fig. 23.

Having computed a steering angle demand in the steer angle demand section 20, the requirement is then to seek to encourage the driver to apply it.

This is achieved by shifting the self-centering position of the steering system. The self center position is the sum of the corrective steer angles established at adder 23 in steer angle demand section 20. The difference between the self centre position and the actual position δ actual calculated at subtracting element 24, is multiplied by a gain 26, K steer, the result is limited at 16 and added to the EAS assistance torque. The effect is that if the driver takes his hands off the steering wheel, the steering wheel will move to the new self-centering position. If he leaves his hands on the wheel he will feel it 'want' to move to the new self-centering position. Steering velocity feedback applied at 18 prevents this shift, resulting in under damped steering oscillations. As the self-centering controller is in essence a steering angle position controller, applying negative feedback of steering velocity dampens the response of this controller by reducing the torque applied to the system as higher column velocities are reached. The driver feedback is preferably arranged to be phased out at low speed to avoid impeding low speed driver manoeuvres.

In the simple split mu controller of Figs. 13 and 33, the output of the steering position controller would be passed via a split mu flag directly into the power steering torque control loop. However, a number of additional refinements can be made to the controlling value that is passed to the power steering system torque control loop that improve the overall response and quality of control. A first improvement can be gained by assessing the 'driver compliance'.

### Assessment of driver compliance

The driver compliance can be defined as driver's resistance to accept the additional steering demands and typically a 'compliant driver' would be one who did not resist and 'non-compliant driver' would be one who did resist. The 'driver compliance' output value can be one of the two calculated values or a combination of the two.

While the driver is complying, the control takes full authority, when the driver resists the control torque is reduced to allow the driver to influence the vehicle. There are three options for generating a value for driver compliance. The first is through rating the driver torque, the second is through rating the steer angle and finally the driver compliance can be derived from a combination of the two different methods.

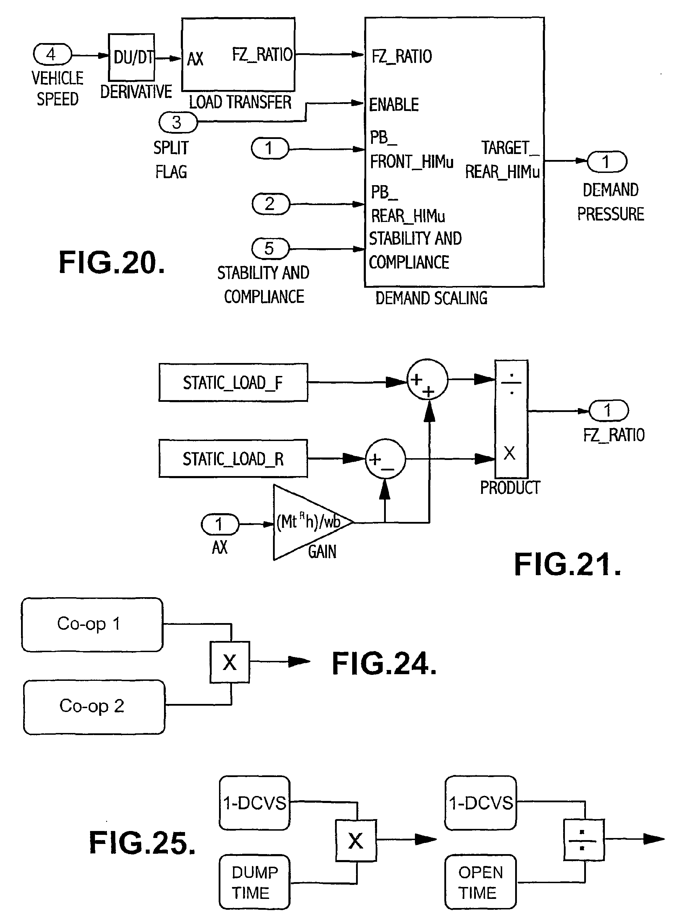

In this situation, the combination could be in the form of a multiplier function or a minimum function, such as illustrated in Fig. 24. Alternatively, the multiplier could be replaced with a MIN function which only passes the minimum value of either Co-op 1 or Co-op2. In all cases, a compliant driver would be indicated by a Co-op value of 1 and a non-compliant driver would be indicated by a value of zero.

## (1) Driver compliance rating from driver torque

Reference is made to Fig. 11 which shows the generation of a driver compliance factor between zero and one based upon the measured driver torque input. A low torque value indicates little resistance to movement of the steering wheel and hence a compliant driver. Conversely a high torque value indicates a high level of driver input resisting steering movement, and hence a non-compliant driver. The steering column torque input is filtered to remove high frequency components and step changes. The filtered torque is mapped against a look up table to give a driver compliance rating between zero and one. The lookup table is shaped to map low torque against a high compliance rating and high torque against a low compliance rating.

Thus, a driver compliance factor is generated so as to be between zero and one based upon the measured driver torque input. A low torque value indicates little resistance to movement of the steering wheel and hence a compliant driver. Conversely a high torque value indicates a high level of driver input resisting steering movement, and hence a non-compliant driver.

The situation can arise whereby the driver torque changes sign, passing through zero between two high torque levels. In this situation the above rating method alone is insufficient, since during the change the torque passes through zero which will generate a high compliance factor. In reality this is a transient situation during which the driver is not-complying.

To overcome this an additional term is used, the filtered driver torque being differentiated to give a rate of change of torque. In the above situation the rate of change of torque is high showing transient resistance to the steering movement. Again, conversely, a low rate of change of torque shows a steady driver input.

The rate of change of torque is mapped against a lookup table to give a driver compliance rating between zero and one. The lookup table is shaped to map low rate of change of torque against a high compliance rating and high rate of change of torque against a low compliance rating.

The rating from filtered torque and the rating from rate of change of torque are combined by multiplication. In this way a high, rapidly changing torque combines to give a low compliance rating. A low, steady torque signal combines to give a high compliance rating. The transient situation described above with a low, rapidly changing torque signal combines to give a low compliance rating.

The magnitude of driver torque level considered high, and the profile of the lookup table are tuneable dependant on the vehicle and the customer requirements.

## (2) Driver compliance rating from steer angle error

Fig. 12 illustrates the generation of a driver compliance factor between zero and one based upon achieved steer angle. The demand steer angle used by the IVCS control is compared to the measured steer angle to give a steer angle error. A non complying driver can override the vehicle control (IVCS) so that the demand steer is not achieved, giving an error between demanded steer angle and measured steer angle. Conversely a complying driver will allow the steering to move to the demanded angle, giving a small or zero error.

The magnitude of the steer angle error is mapped against a lookup table to give a driver compliance value between zero and one. The lookup table is shaped to map a small steer angle error against a high compliance rating and a large steer angle error against a low compliance rating.

The magnitude of a steer angle error considered large, and the profile of the lookup table are tuneable dependant on the vehicle and the customer requirements.

Thus, a driver compliance factor can be generated so as to be between zero and one based upon the achieved steer angle. The demanded steer angle used by the controller is compared to the measured steer angle to give a steer angle error. A non complying driver can override the control so that the demanded steer angle is not achieved, giving an error between demanded steer angle and measured steer angle. Conversely a complying driver will allow the steering to move to the demanded angle, giving a small or zero error.

## Modification of IVCS control with driver compliance

The combined demand torque is enabled through multiplication by the split mu flag as shown in Fig. 23. The torque is then scaled by the driver compliance factor. While the driver is complying, the control takes full authority. When the driver resists, the control torque is reduced to allow the driver to influence the vehicle.

Fig. 13 is a "top level" diagram which includes all of the possible approaches implemented for split mu control as described herein. Fig. 14 is an enabling and scaling diagram showing how the demand torque scaled and split mu flag enabled output torque value is applied to the steering control system.

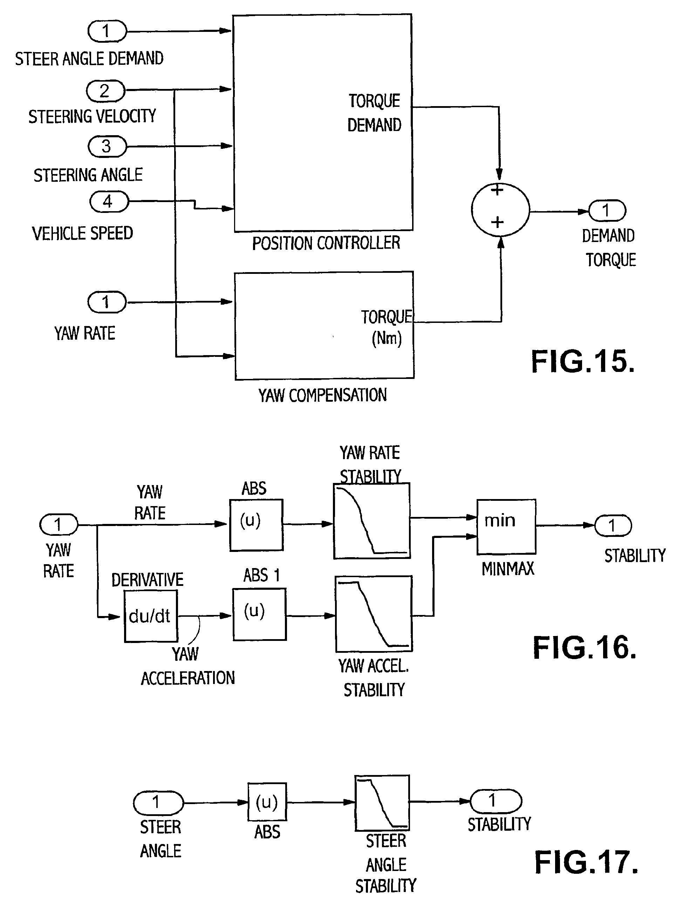

The system of Fig. 13 comprises the control functions of "steer angle demand" (Fig. 1) "torque demand" (Fig. 15), which itself is comprised of the "position control" function (Fig. 10) and the yaw compensation function (Fig. 7).

Steering torque demand (Fig. 15) is based upon the demand steer angle or direct feedback from a signal such as yaw rate. As shown in Fig. 14, this torque demand is enabled through multiplication by a flag signaling split mu braking from the ABS, with a value of one when split mu braking is detected. The enabled signal is then multiplied by a further continuous factor between zero and one dependent on the driver response. This torque demand is sent to the EPAS to allow steering control.

Any one or more of the three steering angle demand variables (a), (b) or (c) described above can be used as the input for the driver feedback controller. However, it is preferred to have at least the first and second, i.e. yaw moment correction and yaw oscillation correction. A construction using all three variables produces a particularly improved level of dynamic vehicle control.

A further improvement may be made by shaping the steering angle demand since the control described applies steering angle earlier than an experienced driver could. A still further improvement may be to provide some feedback compensation in the case of the yaw oscillation control.

An advantage of the present system is that it encourages a driver to apply the correct steering inputs during a split mu stop so that the vehicle stops in a straight line with a minimum amount of yaw oscillation. This has several additional benefits such as to allow the ABS supplier to use a more aggressive ABS tune (no hold-off of pressure build up on the front high mu wheel, possibly no select low on the rear high-mu wheel), thus improving stopping distance.

A further advantage is that the vehicle manufacturer gains more freedom in chassis design. Straight line split mu braking and stable braking in a bend are conflicting requirements. The steering control described hereinbefore eases some of these constraints.

### Further improvements/Additions to the Braking Controller

As described above, a major benefit achievable by the present system is that the controller can stabilise the vehicle, under overall control of the driver and therefore compromises in ABS control system design can be relaxed so as to maximise that available braking utilisation without any undue affect on the vehicle stability. This we generally refer to as making the ABS braking strategy more aggressive when certain vehicle stability criteria are satisfied.

In order to determine whether a more aggressive ABS braking strategy could be used, a method of assessing the stability of the vehicle has to be implemented.

### Assessment of vehicle stability

A vehicle stability value generated during a split-mu braking manoeuvre is generated from the yaw rate and steer angle of the vehicle. The output vehicle stability value can be one of the two calculated values or a combination of the two.

### (1) Vehicle Stability rating from yaw rate

Referring to Fig. 16, this diagram generates a vehicle stability factor between zero and one based upon the measured yaw rate. A low yaw rate indicates a stable vehicle. Conversely a high yaw rate value indicates a less stable vehicle.

The yaw rate is mapped against a look up table to give a vehicle stability rating between zero and one. The lookup table is shaped to map low yaw rate against a high stability rating and high yaw rate against a low stability rating.

The situation can arise whereby the yaw rate is small yet the vehicle is still unstable. For example if the driver applies an excessive steer angle to counteract a yaw rate, the vehicle's yaw rate will drop before reversing sign as the vehicle yaws in the opposite direction. In situations like this, the above rating method alone is insufficient since in changing direction the yaw rate passes through zero which would give a falsely stable vehicle rating.

To overcome this an additional term is used, the yaw rate being differentiated to give yaw acceleration. In the above situation yaw acceleration is high, showing transient vehicle instability. Again, conversely, a low yaw acceleration shows a more stable vehicle with a steady yaw rate.

The yaw acceleration is mapped against a lookup table to give a vehicle stability rating between zero and one. The lookup table is shaped to map low yaw acceleration against a high vehicle stability rating and high yaw acceleration against a low vehicle stability.

The rating from yaw rate and the rating from yaw acceleration are combined by selecting the minimum value. In this way either a high yaw rate or a high yaw acceleration give a low vehicle stability rating. A high vehicle stability rating can only be achieved from a low yaw rate and low yaw acceleration.

The magnitude of a yaw rate and yaw acceleration considered high, and the profile of the lookup table are tuneable dependant on the vehicle and the customer requirements.

**(2) Vehicle Stability rating from steer angle**

Referring to Fig. 17, this diagram generates a vehicle stability factor between zero and one based upon the steer angle. The steer angle required to stabilise a vehicle during a split-mu stop is often used as a measure of the vehicle's stability. A small steer angle shows a small disturbance on the vehicle and hence a stable vehicle that could be controlled by most drivers. Larger steer angles correspond to larger disturbances from more aggressive braking; this results in better stopping distance but a generally less stable vehicle.

The magnitude of the steer angle is mapped against a lookup table to give a vehicle stability rating and large steer angle against a low vehicle stability rating.

The magnitude of a steer angle considered large, and the profile of the lookup table are tuneable dependant on the vehicle and the customer requirements.

The latter two methods proposed provide a value which is indicative of the overall stability of the vehicle.


**Vehicle Stability - further developments**

As in the case of driver compliance as described above, the vehicle stability function could likewise be formed from one or other or both of the yaw rate or steer angle dependent functions and the combined function would be developed in the same way as shown above in the compliance control (Fig. 24). As before, a stable vehicle would be indicated by a function value of 1 and an unstable vehicle would be indicated by a value of zero.

Returning to the overall system diagram as shown in Fig. 13, below the "Torque Demand" function there is shown a "Driver Response & Vehicle Stability" function. This control section comprises the Driver Compliance functions and the Vehicle Stability functions. They are shown in the same control box since, in theory, a combination of the two outputs from the "Driver Compliance" and "Vehicle Stability" functions could likewise be combined as above with a simple multiplier or MIN function and used to modify the overall gain set for either or both of the power steering function or the ABS function.

**Modification of the Power Steering Control** In Fig. 13 the power steering control is at least modified by the Driver Compliance gain as applied to the output of the enabled Torque Demand. This scaled value is passed through to the power steering torque control function for modifying the steering control.

**Modification of the ABS Control function** In Fig. 13 the output of the Vehicle Stability function, optionally compensated by the Driver Compliance function, (herein after referred to as DCVS) is passed directly to the ABS system and to a Rear Pressure Demand function.

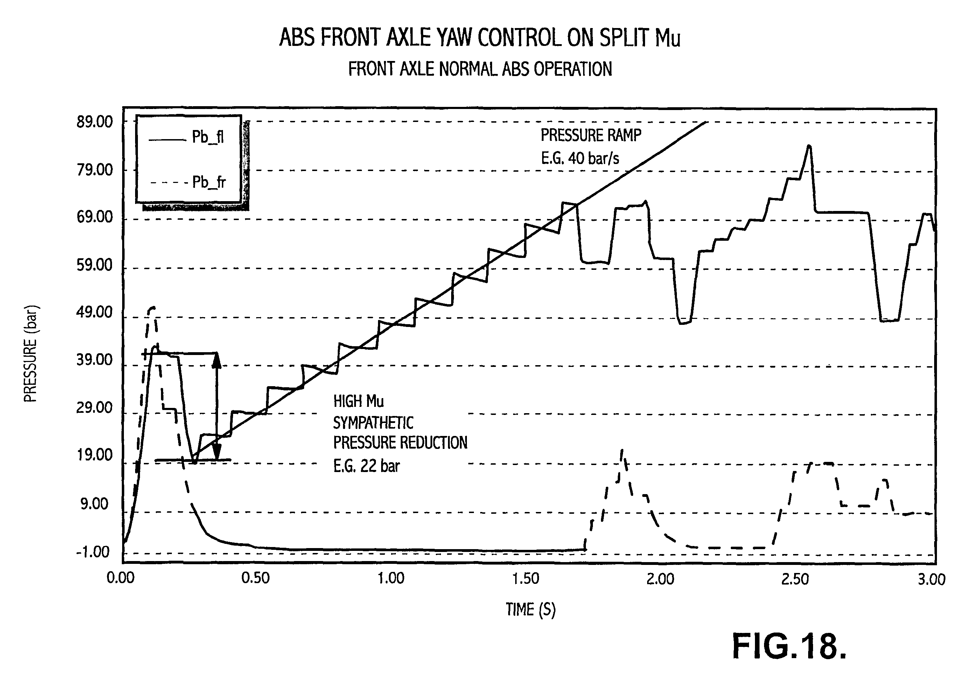

**Modification of the ABS control on the front axle -** the DCVS gain represented by the Vehicle Stability function is used within the ABS controller to modify the sympathetic first cycle that the high mu wheel receives when low mu wheel starts to enter ABS mode on a split mu surface. Typically, in a conventional ABS system, when the low mu wheel dumps its signal, thee high mu wheel receives a sympathetic dump signal, even though that wheel is not skidding. This is to help prevent the build up of a yawing moment caused by applying the brakes. Thereafter, once a prescribed dump period has elapsed the brakes on the high mu wheel are re-applied at a relatively slow rate. This cycle can be seen in Fig. 18.

With the improvements in stability obtained by influencing the steered action of the vehicle it is now possible to allow a greater amount of brake induced yawing moment as this will be controlled through the dynamic intervention of the steering controller.

Therefore it is now possible to increase the rate at which brake pressure is re-applied on the high mu wheel and reduce the time for which the front wheel brakes are dumped.

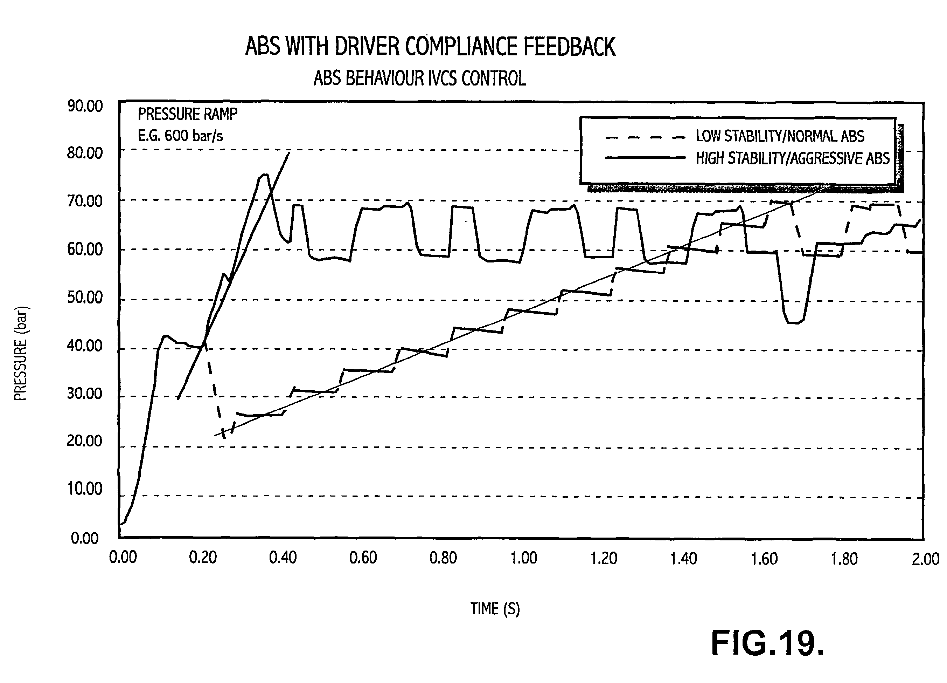

As shown in Fig. 19 and with reference to the description hereinbefore, a more aggressive ABS braking strategy could be achieved by multiplying the prescribed sympathetic dump time for a standard sympathetic pressure dump, by the (1-DCVS) where the DCVS gain would be approaching 1 for a stable vehicle and zero for an unstable vehicle.

The actual dump time would vary in dependence upon the DCVS gain which in turn varies in accordance with the Vehicle Stability rating and optionally the Driver Compliance rating. The actual DCVS gain is determined dynamically and therefore the actual time that the brakes are dumped for would be updated during the dump phase.

Likewise, the rate at which the brake pressure is reapplied is likewise dependent upon the DCVS gain which essentially controls the time for which the pressure application valve is opened. Therefore with a DCVS gain of 1, ie. a stable vehicle, the opening time for the brake pressure application valve would be divided by (1-DCVS). Therefore, in a stable vehicle the opening time of the pressure application valve would approach constantly open whereas for an unstable vehicle the pressure application valve would only open for the prescribed (sympathetic) opening time. (See Fig. 25).

Likewise, the reapplication rate can be varied throughout the duration of the first reapplication so as to dynamically take account of the changing vehicle stability and driver compliance.

After the first sympathetic dump and reapplication, normal ABS control is resumed. On the rear axle, a typical select low routine would normally be applied but it is well known in the art that the available braking utilisation on the high mu side is lost at the rear wheel because of this strategy. Embodiments of the present invention seeks to further overcome this problem by dynamically calculating a rear brake pressure that should be demanded of the brake control system given knowledge of the front high mu brake pressure, the deceleration of the vehicle and therefore the weight transfer from rear axle to front of the vehicle and the stability/driver compliance as detected in the vehicle's dynamic state.

A pressure demand for the rear brakes is calculated based upon the above in the following manner. This pressure is applied to the rear brakes with the optional compensations, the result being that the rear wheel on the high mu side is braked at substantially higher pressure than it would have had had a conventional select low routine been used because the vehicle can now be maintained stable through influencing of the steering control. The overall effect is an improvement in the vehicle braking utilisation from the rear wheel on the high mu side which results in improved stopping performance without degrading the vehicle stability.

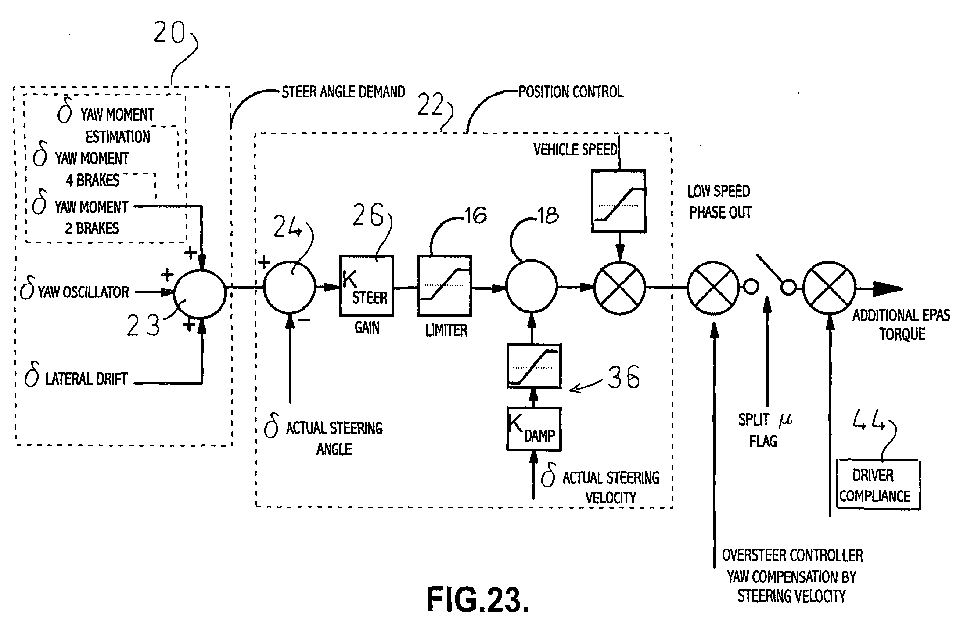

**Rear wheel pressure control during split mu braking** (See description hereinbefore for Rear wheel pressure control during split mu braking diagram). The high mu rear wheel pressure demand is generated from the front high mu wheel pressure and the estimated ratio of load front/rear. Vehicle speed is differentiated to give vehicle acceleration which is used by the load transfer block. This function generates a predicted high mu side brake pressure substantially generated from a knowledge of the instantaneous front brake pressure, the brake force distribution and the weight transfer from the rear axle to the front due to the deceleration of the vehicle. In the control block of Fig. 26, the vehicle longitudinal velocity is measured and differentiated to give vehicle deceleration during braking. A load transfer value is generated from this deceleration. This load transfer estimation is described below. When enabled by the presence of a split mu flag, a rear axle demand pressure is calculated on the basis of the front brake pressure and the weight transfer value and the actual rear axle pressure is monitored as part of a closed loop control function. Again, the stability and compliance functions can be used to set the overall gain as per the front axle.

The above illustration of Fig. 26 comprises a number of discrete control operations which are discussed in outline below:-

**Load Transfer Estimation** (see Load Transfer Estimation diagram of Fig. 21). The vehicle acceleration signal 1 multiplied by a gain (Total Vehicle Mass times Gravitational Constant Divided by Vehicle Wheelbase) to give an estimate of the dynamic front-rear load transfer caused by this deceleration. The dynamic load transfer value is added to the static front axle load and subtracted from the rear axle load to give estimated dynamic axle load. The ratio of rear to front dynamic axle load is calculated as the output from this block. This function is incorporated within the rear axle demand pressure calculation above.

**Demand Pressure calculation** (See Demand Pressure calculation diagram of Fig. 22). The Demand Scaling function in the rear wheel Pressure control function above can be further broken down into the following ABS control method. The ABS split mu flag allows the high mu side of the car to be detected and the front and rear wheel pressures to be selected as input to this block. The rear high mu pressure demand is based on the front high mu pressure multiplied by the dynamic load ratio. The driver compliance / vehicle stability rating is multiplied by a gain to allow a maximum proportion of the demand pressure to be set. The high mu rear pressure demand is multiplied by the scaled compliance/stability rating, giving a pressure demand in proportion to the vehicle's behaviour.

**Filtering and Checking** (See Demand Pressure calculation diagram of Fig. 22). With reference to the above figure, the pressure on the high mu rear wheel when split mu is detected is latched for the duration of the stop. To prevent the demand pressure following every ABS pressure cycle of the front wheel the demand pressure is filtered. The filter is reset at the start of the stop by the split mu flag being set, and the filter is initialised from the latched rear wheel pressure at the start of the stop and when the split mu flag is enabled. This ensures that there has been sufficient pressure applied to provide a substantial braking effect, therefore ensuring that the rear wheel pressure demand is both non-zero and approximately equal to the calculated maximum for the surface.

A final check is carried out by ensuring that the demand rear pressure can never exceed the measured front high mu pressure. This is done by selecting the minimum value of the filtered demand pressure and the measured front high mu pressure. The resulting value is output as the rear pressure demand to ABS.

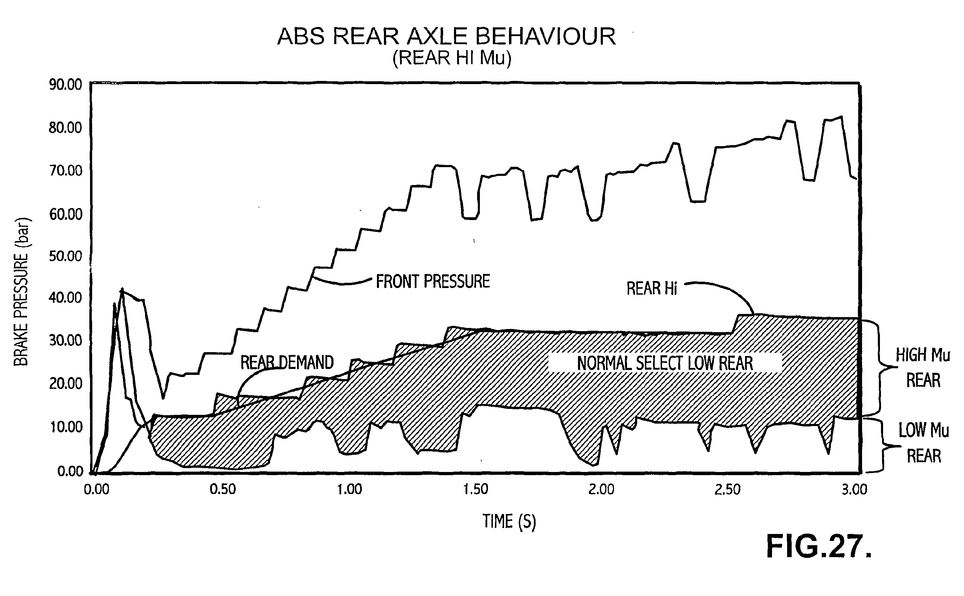

The ABS system then uses this demand to calculate the appropriate solenoid firing times for controlling the rear brake pressure within the rear brake pressure control function. This function can be seen in the illustration of Fig. 27.

**Modification of ABS behaviour with IVCS**

(1) Modification of front axle yaw control behaviour with driver compliance and vehicle stability.

Referring to the top level diagram of Fig. 13, the vehicle stability and driver compliance rating is sent to the ABS controller. Dependent on these ratings the initial yaw control of the ABS is modified.

**(a) Low Rating - Normal ABS behaviour**

: Brakes Applied on split surface
: Split detected by ABS, split mu flag set to high
: (IVCS Steering control enabled)
: High mu front wheel reduces pressure in sympathy with front low mu wheel
: High mu front wheel slowly increases pressure until slip threshold is reached

**(b) Mid rating - More Aggressive ABS behaviour**

: Brakes Applied on split surface
: Split detected by ABS, split mu flag set to high
: (IVCS steering control enabled)
: Sympathetic pressure reduction on from high mu wheel reduced
: Faster increase in pressure on high mu front wheel until slip threshold is reached.

**(c) High rating - Aggressive ABS behaviour**

: Brakes Applied on split surface
: Split detected by ABS, split mu flag set to high
: (IVCS steering control enabled)
: Sympathetic pressure reduction on front high mu wheel disabled
: Rapid increase in pressure on high mu front wheel until slip threshold is reached.

Fig. 18 shows a diagram of normal ABS behaviour on the front axle during split-mu braking. Fig. 19 shows the two extremes corresponding to (a) and (b) above. As the compliance and stability rating varies between zero and one, the level of pressure reduction and the rate of pressure ramp is varied continuously.

**Rear wheel pressure control during split mu braking**

Reference is made to fig. 20. The high mu rear wheel pressure demand is generated from the front high mu wheel pressure and the estimated ratio of load front/rear. Vehicle speed is differentiated to give vehicle acceleration which is used by the load transfer block.

**Load Transfer Estimation**

Referring to Fig. 21, the vehicle acceleration signal I is multiplied by a gain (Total Vehicle Mass time Gravitational Constant Divided by Vehicle Wheelbase) to give an estimate of the dynamic front-rear load transfer caused by this deceleration.
The dynamic load transfer value is added to the static front axle load and subtracted from the rear axle load to give estimated dynamic axle load. The ratio of rear to front dynamic axle load is calculated as the output from this block.

**Demand pressure calculation**

Referring to fig. 22, the abs split flag allows the high mu side of the car to be detected and the front and rear wheel pressures to be selected as inputs to this block. The rear high mu pressure demand is based on the front high mu pressure multiplied by the dynamic load ratio.

**Modification of demand pressure with driver compliance and vehicle stability**

Referring agin to Fig. 22, the driver compliance / vehicle stability rating is multiplied by a gain to allow a maximum proportion of the demand pressure to be set. The high mu rear pressure demand is multiplied by the scaled compliance/stability rating, giving a pressure demand in proportion to the vehicle's behaviour.

## Filtering and Checking

Referring again to fig. 22, the pressure on the high mu rear wheel when split mu is detected is latched for the duration of the stop. To prevent the demand pressure following every ABS pressure cycle of the front wheel the demand pressure is filtered. The filter is reset at the start of the stop by the split mu flag being set, and the filter is initialise d from the latched rear wheel pressure at the start of the stop.

A final check is carried out by ensuring that the demand rear pressure can never exceed the measured front high mu pressure. This is done by selecting the minimum value of the filtered demand pressure and the measured front high mu pressure. The resulting value is output as the rear pressure demand to ABS.

The aforegoing system is capable of achieving a number of advantages operating characteristics, including one or more of the following:

(1) vehicle stability enhancement through steering control, including adjustment of self centering and feel of the steering during split mu braking to main vehicle stability.

(2) Low frequency compensation from yaw moment estimate, wherein estimated yaw moment is used to demand angular offset of steering.

(3) Higher frequency compensation by steer velocity control wherein steering velocity control is generated from vehicle yaw rate.

(4) Higher frequency compensation from yaw rate feedback wherein direct feedback of vehicle yaw rate is converted into demand steering angle.

(5) Lateral drift compensation from lateral acceleration wherein proportional and integral compensation based on vehicle lateral acceleration is used to generate demand steering angle.

(6) Yaw moment estimation from brake pressure wherein a yaw moment estimate is generated from difference in front brake pressure.

(7) Yaw moment estimation through vehicle model and feedback loop involving modification of a two degree-of-freedom vehicle model and observation of yaw moment through feedback of yaw rate error.

(8) Assessment of driver behaviour wherein column torque is used as a measure of driver behaviour and compliance with the active steering system.

(9) Assessment of vehicle stability wherein yaw rate is used as a measure of vehicle stability and steer angle is used as a measure of vehicle stability during split mu braking.

(10) Modification of control with driver behaviour wherein driver behaviour assessment is used for scaling of system demand torque, to prevent overriding the driver.

(11) Modification of ABS behaviour with driver behaviour and vehicle stability.

(12) Modification of ABS behaviour using modification of front axle ABS yaw control behaviour with driver behaviour and vehicle stability and ABS pressure control of rear high mu wheel during a split mu stop.

(13) Generation of rear pressure demand wherein rear high mu wheel demand pressure is generated from vehicle dynamics data and vehicle parameters and rear high mu wheel demand pressure is modified with driver behaviour and vehicle stability.

## Claims

1. A vehicle stability compensation system which is arranged to adjust dynamically the self-centering position and the steering feel of the steering system during split mu braking operation, comprising

   (a) means (16) for establishing at least one operational variable representing a corrective steer angle for the vehicle and hence representing a target self-centering position;

   (b) a driver feedback controller (22, 24) which takes one of said operational variables, or the sum of two or more of the variables, representative of target self-centering position and subtracts therefrom the actual steering angle to derive a target self-centering error; and

   (c) gain means (24) for establishing a torque demand proportional to the target self-centering error which is added to the EAS assistance torque to shift the self-centering position so as to encourage the driver to move the steering wheel such as to reduce the target self-centering error to zero for maintaining the vehicle stable and controllable.

2. A vehicle stability compensation system as claimed in claim 1, comprising a means (28) for establishing braking yaw moment as said operational variable representative of a corrective steer angle.

3. A vehicle stability compensation system as claimed in claim 2, wherein the braking yaw moment is established by generating and subtracting from each other estimates of the brake pressures at the front left and front right wheels, multiplying the difference by a constant to give the difference in brake forces for the front wheels, and the dividing the result by the track width of the vehicle.

4. A vehicle stability compensation system as claimed in claim 3, wherein the braking yaw moment is multiplied by a gain (34) to give the corrective steer angle.

5. A vehicle stability compensation system as claimed in claim 1, comprising a means (34) for establishing yaw oscillation moment as said operational variable representative of a corrective steer angle.

6. A vehicle stability compensation system as claimed in claim 5, wherein the yaw oscillation moment is established by means (10) which invert a yaw rate signal, and multiply this by a gain ($K_{yaw}$), the result being used as a feedback signal providing yaw oscillation correction.

7. A vehicle stability compensation system as claimed in claim 1 comprising means (32) for establishing lateral drift correction as said operational variable representative of a corrective steer angle.

8. A vehicle stability compensation system as claimed in claim 7, wherein lateral drift correction is established by inverting a vehicle lateral acceleration signal of an inverter (12) and applying proportional plus integral compensation at a P-I compensator (14) to provide the lateral drift correction.

9. A vehicle stability compensation system as claimed in any of claims 1 to 8, wherein said torque demand proportional to the target self-centering error is added to the EAS assistance torque by way of a limiter (16).

10. A vehicle stability compensation system as claimed in claim 9, including means (36) enabling steering velocity feedback to be applied to prevent the shift resulting in under-damped steering oscillations.

11. A vehicle stability compensation system as claimed in claim 10, wherein the steering velocity feedback provided by said means (36) is arranged to be phased out at lower speeds to avoid impeding low speed driver manoeuvres.

12. A vehicle stability compensation system as claimed in claim 1, comprising a means for establishing yaw oscillation correction with an operational variable representative of a corrective steering velocity.

13. A vehicle stability compensation system as claimed in claim 12, wherein said operational variable of corrective steering velocity is compared with the actual steering velocity and the difference is added to the EAS assistance torque.

14. A vehicle stability compensation system as claimed in claim 1 wherein said operational variable is vehicle yaw rate and wherein a vehicle model (40) is used to generate an estimate of yaw rate from vehicle speed and steer angle.

15. A vehicle stability compensation system as claimed in claim 14, wherein said estimated yaw rate is subtracted from the actual vehicle yaw rate to give a yaw rate error.

16. A vehicle stability compensation system as claimed in claim 15 wherein said yaw rate error is passed through a compensator (42) in order to estimate the yaw moment causing the yaw rate error.

17. A vehicle stability compensation system as claimed in claim 16 wherein the estimated yaw moment is used to modify the yaw behavior of said vehicle mode (40).

18. A vehicle stability compensation system as claimed in claim 2, wherein the braking yaw moment is generated by means of a vehicle model (40) and compensator (42) as claimed in claims 14 to 17.

19. A vehicle stability compensation system as claimed in any of claims 1 to 18, including a means (44) for deriving a driver compliance rating corresponding to a driver's resistance to accept additional steering demands provided by the system.

20. A vehicle stability compensation system as claimed in claim 19, including means for establishing said driver compliance rating using a lookup map based on operational variable steering column torque.

21. A vehicle stability compensation system as claimed in claim 19, including means for establishing said driver compliance rating using a lookup map based on operational variable rate of change of driver steering torque.

22. A vehicle stability compensation system as claimed in claim 20 or 21, wherein a combination of driver compliance rating is established based on the steering column torque and rate of change or driver steering torque, for example by multiplication.

23. A vehicle stability compensation system as claimed in any of claims 2 to 8, wherein the steer angle error is established by subtracting demand steer angle from actual steer angle.

24. A vehicle stability compensation system as claimed in claims 19 and 23, including means for establishing the driver compliance rating using a lookup map based on the operational variable steer angle error.

25. A vehicle stability compensation system as claimed in claims 21 and 24, wherein a combination of driver compliance ratings is established based on the combined rating from claim 22 and the steer angle error of claim 24.

26. A vehicle stability compensation system having driver compliance rating as claimed in claim 20 or 24, or combined compliance rating as claimed in claim 25, which is used to scale the EAS assistance torque as claimed in claim 9 for the purposes of preventing excessive torque application.

27. A vehicle stability compensation system as claimed in any of claims 1 to 26, including means for establishing a value representative of vehicle stability.

28. A vehicle stability compensation system as claimed in claim 27, wherein said vehicle stability value is established using a lookup map based on operational variable actual yaw rate.

29. A vehicle stability compensation system as claimed in claim 27, wherein said vehicle stability value is established using a lookup map based on operational variable yaw acceleration.

30. A vehicle stability compensation system as claimed in claim 28 and 29, wherein a combination of vehicle stability rating is established by combining said actual yaw rate and yaw acceleration, for example by multiplication.

31. A vehicle stability compensation system as claimed in claim 27, wherein said vehicle stability value is established using a lookup table based on operational variable steer angle.

32. A vehicle stability compensation system as claimed in claims 30 and 31, wherein a combination of vehicle stability ratings is established by multiplying together said ratings as obtained by the arrangements of claims 30 and 31.

33. A vehicle stability system as claimed in claim 25 and claim 32 wherein the driver compliance rating and vehicle stability rating are combined, for example by multiplication.

34. A vehicle stability compensation system as claimed in claim 1 having means for variation of ABS initial sympathetic pressure dump, the dump valve open time being based on the driver's compliance as generated in claim 25 or the vehicle stability rate as generated in claim 32, or on the combination of the two as claimed in claim 33.

35. A vehicle stability compensation system as claimed in claim 1 having means for variation of ABS front high mu pressure ramp, the apply valve time being based upon the driver compliance as generated in claim 25 or the vehicle stability rate as generated in claim 32, or on the combination of the two as claimed in claim 33.

36. A vehicle stability system as claimed in any of claims 1 to 35, having means for generating an estimated vertical load split from vehicle deceleration and vehicle parameters.

37. A vehicle stability compensation system as claimed in claim 36, including means for generating rear pressure demand by multiplying the measured front high mu brake pressure by an estimated vertical load ratio as claimed in claim 36.

**38.** A vehicle stability compensation system as claimed in claim 37, wherein the rear pressure demand is scaled by multiplication by driver's compliance as established in claim 25 or vehicle stability as established in claim 32, or a combination of the two as established in claim 33.

**39.** A vehicle stability compensation system as claimed in claim 37 or 38 in which the rear pressure demand is filtered to remove high pressure frequency components and rapid changes from demand pressure signal.

**40.** A vehicle stability compensation system as claimed in claim 39 including means for initialization of the filter by an enabling split mu flag from the vehicle ABS whereby the initial value of the filter is set to the instantaneous value of the measured rear high mu brake pressure for removing any lag introduced by initializing the filter at a value of zero.

**41.** A vehicle stability compensation system as claimed in any of claims 37 to 40, having means for modification of the ABS to control the high mu rear pressure to demand pressure.

**Patentansprüche**

**1.** Fahrzeugstabilitätsausgleichssystem, das eingerichtet ist, um dynamisch die Selbstzentrierposition und das Lenkgefühl des Lenksystems während Split-mu-Bremsbetrieb anzupassen, umfassend:

(a) Mittel (16) zum Feststellen mindestens einer Betriebsvariablen, die einen Korrekturlenkwinkel für das Fahrzeug darstellt und folglich eine Zielselbstzentrierposition darstellt;
(b) einen Fahrerrückmeldekontroller (22, 24), der eine der Betriebsvariablen oder die Summe von zwei oder mehr eine Zielselbstzentrierposition darstellenden Variablen nimmt und davon den tatsächlichen Lenkwinkel subtrahiert, um einen Zielselbstzentrierfehler abzuleiten; und
(c) Verstärkungsmittel (24) zum Feststellen einer Drehmomentanforderung proportional zu dem Zielselbstzentrierfehler, die zu dem EAS-Unterstützungsdrehmoment addiert wird, um die Selbstzentrierposition so zu verschieben, dass der Fahrer darin bestärkt wird, das Lenkrad so zu bewegen, um den Zielselbstzentrierfehler auf null zu reduzieren, damit das Fahrzeugs stabil und steuerbar gehalten wird.

**2.** Fahrzeugstabilitätsausgleichssystem nach Anspruch 1, das ein Mittel (28) zum Feststellen eines Bremsgiermoments als die Betriebsvariable aufweist, die einen Korrekturlenkwinkel darstellt.

**3.** Fahrzeugstabilitätsausgleichssystem nach Anspruch 2, bei dem das Bremsgiermoment durch Erzeugen von Schätzungen der Bremsdrucke an dem linken und rechten Vorderrad und Subtrahieren derselben voneinander, Multiplizieren der Differenz mit einer Konstante, um die Differenz in Bremskräften für die Vorderräder zu erhalten, und das Teilen des Ergebnisses durch die Spurbreite des Fahrzeugs festgestellt wird.

**4.** Fahrzeugstabilitätsausgleichssystem nach Anspruch 3, bei dem das Bremsgiermoment mit einer Verstärkung (34) multipliziert wird, um den Korrekturlenkwinkel zu erhalten.

**5.** Fahrzeugstabilitätsausgleichssystem nach Anspruch 1, das ein Mittel (34) zum Feststellen eines Gieroszillationsmoments als die Betriebsvariable aufweist, die einen Korrekturlenkwinkel darstellt.

**6.** Fahrzeugstabilitätsausgleichssystem nach Anspruch 5, bei dem das Gieroszillationsmoment durch Mittel (10) festgestellt wird, die ein Giergeschwindigkeitssignal invertieren und dies mit einer Verstärkung ($K_{yaw}$) multiplizieren, wobei das Ergebnis als ein Rückmeldesignal verwendet wird, das Gieroszillationskorrektur liefert.

**7.** Fahrzeugstabilitätsausgleichssystem nach Anspruch 1, das Mittel (32) zum Feststellen von Seitendriftkorrektur als die Betriebsvariable aufweist, die einen Korrekturlenkwinkel darstellt.

**8.** Fahrzeugstabilitätsausgleichssystem nach Anspruch 7, bei dem Seitendriftkorrektur festgestellt wird durch Invertieren eines Fahrzeugseitenbeschleunigungssignals eines Inverters (12) und Anwenden von Proportional- plus Integralausgleich in einem P-I-Kompensator (14), um die Seitendriftkorrektur zu liefern.

**9.** Fahrzeugstabilitätsausgleichssystem nach einem der Ansprüche 1 bis 8, bei dem die zu dem Zielselbstzentrierfehler proportionale Drehmomentanforderung zu dem EAS-Unterstützungsdrehmoment mittels eines Begrenzers (16) addiert wird.

10. Fahrzeugstabilitätsausgleichssystem nach Anspruch 9, das Mittel (36) zum Ermöglichen von Lenkgeschwindigkeitsrückmeldung einschließt, die anzuwenden ist, um die Verschiebung zu verhindern, die zu gering gedämpften Lenkoszillationen führt.

11. Fahrzeugstabilitätsausgleichssystem nach Anspruch 10, bei dem die durch das Mittel (36) gelieferte Lenkgeschwindigkeitsrückmeldung eingerichtet ist, um bei niedrigeren Geschwindigkeiten auszulaufen, um Behinderung von Fahrermanövern bei niedrigen Geschwindigkeiten zu vermeiden.

12. Fahrzeugstabilitätsausgleichssystem nach Anspruch 1, das ein Mittel zum Feststellen von Gieroszillationskorrektur mit einer Betriebsvariablen aufweist, die eine Korrekturlenkgeschwindigkeit darstellt.

13. Fahrzeugstabilitätsausgleichssystem nach Anspruch 12, bei dem die Betriebsvariable von Korrekturlenkgeschwindigkeit mit der tatsächlichen Lenkgeschwindigkeit verglichen wird und die Differenz dem EAS-Unterstützungsdrehmoment hinzugefügt wird.

14. Fahrzeugstabilitätsausgleichssystem nach Anspruch 1, bei dem die Betriebsvariable die Fahrzeuggiergeschwindigkeit ist und bei dem ein Fahrzeugmodell (40) zum Erzeugen einer Schätzung der Giergeschwindigkeit anhand von Fahrzeuggeschwindigkeit und Lenkwinkel verwendet wird.

15. Fahrzeugstabilitätsausgleichssystem nach Anspruch 14, bei dem die geschätzte Giergeschwindigkeit von der tatsächlichen Fahrzeuggiergeschwindigkeit abgezogen wird, um einen Giergeschwindigkeitsfehler zu erhalten.

16. Fahrzeugstabilitätsausgleichssystem nach Anspruch 15, bei dem der Giergeschwindigkeitsfehler durch einen Kompensator (42) geleitet wird, um das den Giergeschwindigkeitsfehler bewirkende Giermoment zu schätzen.

17. Fahrzeugstabilitätsausgleichssystem nach Anspruch 16, bei dem das geschätzte Giermoment zum Modifizieren des Gierverhaltens der Fahrzeugbetriebsart (40) verwendet wird.

18. Fahrzeugstabilitätsausgleichssystem nach Anspruch 2, bei dem das Bremsgiermoment mittels eines Fahrzeugmodells (40) und eines Kompensators (42) nach den Ansprüchen 14 bis 17 erzeugt wird.

19. Fahrzeugstabilitätsausgleichssystem nach einem der Ansprüche 1 bis 18, das ein Mittel (44) einschließt zum Ableiten einer Fahrereinwilligungsbeurteilung entsprechend dem Widerstand eines Fahrers, zusätzliche, durch das System gelieferte Lenkanforderungen zu akzeptieren.

20. Fahrzeugstabilitätsausgleichssystem nach Anspruch 19, das Mittel zum Feststellen der Fahrereinwilligungsbeurteilung unter Verwendung einer Nachschlagekarte basierend auf der Betriebsvariablen Lenksäulendrehmoment einschließt.

21. Fahrzeugstabilitätsausgleichssystem nach Anspruch 19, das Mittel zum Feststellen der Fahrereinwilligungsbeurteilung unter Verwendung einer Nachschlagekarte basierend auf der Betriebsvariablen Änderungsrate von Fahrerlenkdrehmoment einschließt.

22. Fahrzeugstabilitätsausgleichssystem nach Anspruch 20 oder 21, bei dem eine Kombination von Fahrereinwilligungsbeurteilung basierend auf dem Lenksäulendrehmoment und der Änderungsrate von Fahrerlenkdrehmoment zum Beispiel durch Multiplikation festgestellt wird.

23. Fahrzeugstabilitätsausgleichssystem nach einem der Ansprüche 2 bis 8, bei dem der Lenkwinkelfehler durch Subtrahieren des Anforderungslenkwinkels von dem tatsächlichen Lenkwinkel festgestellt wird.

24. Fahrzeugstabilitätsausgleichssystem nach den Ansprüchen 19 und 23, das Mittel zum Feststellen der Fahrereinwilligungsbeurteilung unter Verwendung einer Nachschlagekarte basierend auf der Betriebsvariablen Lenkwinkelfehler einschließt.

25. Fahrzeugstabilitätsausgleichssystem nach den Ansprüchen 21 und 24, bei dem eine Kombination von Fahrereinwilligungsbeurteilungen basierend auf der kombinierten Beurteilung von Anspruch 22 und dem Lenkwinkelfehler von Anspruch 24 festgestellt wird.

26. Fahrzeugstabilitätsausgleichssystem mit einer Fahrereinwilligungsbeurteilung nach Anspruch 20 oder 24, oder kombinierter Einwilligungsbeurteilung nach Anspruch 25, die zum Skalieren des EAS-Unterstützungsdrehmoments nach Anspruch 9 zum Zweck der Verhinderung übermäßiger Drehmomentanlegung verwendet wird.

27. Fahrzeugstabilitätsausgleichssystem nach einem der Ansprüche 1 bis 26, das Mittel zum Feststellen eines Fahrzeugstabilität darstellenden Werts einschließt.

28. Fahrzeugstabilitätsausgleichssystem nach Anspruch 27, bei dem der Fahrzeugstabilitätswert unter Verwendung einer Nachschlagekarte basierend auf der Betriebsvariablen tatsächliche Giergeschwindigkeit festgestellt wird.

29. Fahrzeugstabilitätsausgleichssystem nach Anspruch 27, bei dem der Fahrzeugstabilitätswert unter Verwendung einer Nachschlagekarte basierend auf der Betriebsvariablen Gierbeschleunigung festgestellt wird.

30. Fahrzeugstabilitätsausgleichssystem nach Anspruch 28 und 29, bei dem eine Kombination von Fahrzeugstabilitätsbeurteilung durch Kombinieren der tatsächlichen Giergeschwindigkeit und Gierbeschleunigung zum Beispiel durch Multiplikation festgestellt wird.

31. Fahrzeugstabilitätsausgleichssystem nach Anspruch 27, bei dem der Fahrzeugstabilitätswert unter Verwendung einer Nachschlagetabelle basierend auf der Betriebsvariablen Lenkwinkel festgestellt wird.

32. Fahrzeugstabilitätsausgleichssystem nach den Ansprüchen 30 und 31, bei dem eine Kombination von Fahrzeugstabilitätsbeurteilungen durch Multiplizieren der Beurteilungen miteinander, wie sie durch die Anordnungen der Ansprüche 30 und 31 erhalten werden, festgestellt werden.

33. Fahrzeugstabilitätsausgleichssystem nach Anspruch 25 und Anspruch 32, bei dem die Fahrereinwilligungsbeurteilung und Fahrzeugstabilitätsbeurteilung zum Beispiel durch Multiplikation kombiniert werden.

34. Fahrzeugstabilitätsausgleichssystem nach Anspruch 1, das ein Mittel zur Variation von sympathetischem ABS-Anfangsdruckabfall aufweist, wobei die offene Zeit des Ablassventils auf der wie in Anspruch 25 erzeugten Fahrereinwilligung oder der wie in Anspruch 32 erzeugten Fahrzeugstabilitätsrate, oder auf der Kombination der beiden nach Anspruch 33 basiert.

35. Fahrzeugstabilitätsausgleichssystem nach Anspruch 1, das Mittel zur Variation von High-mu-ABS-Frontdruckanstieg aufweist, wobei die Ventilbetätigungszeit auf der wie in Anspruch 25 erzeugten Fahrereinwilligung oder der wie in Anspruch 32 erzeugten Fahrzeugstabilitätsrate, oder auf der Kombination der beiden nach Anspruch 33 basiert.

36. Fahrzeugstabilitätssystem nach einem der Ansprüche 1 bis 35, das ein Mittel zum Erzeugen einer geschätzten vertikalen Lastaufteilung anhand von Fahrzeugverlangsamung und Fahrzeugparametern aufweist.

37. Fahrzeugstabilitätsausgleichssystem nach Anspruch 36, das Mittel zum Erzeugen von Heckdruckanforderung durch Multiplizieren des gemessenen Hi-mu-Frontbremsdrucks mit einem geschätzten, vertikalen Lastverhältnis nach Anspruch 36 einschließt.

38. Fahrzeugstabilitätsausgleichssystem nach Anspruch 37, bei dem die Heckdruckanforderung durch Multiplizieren mit der wie in Anspruch 25 festgestellten Fahrereinwilligung oder der wie in Anspruch 32 festgestellten Fahrzeugstabilität oder einer Kombination der beiden, wie sie in Anspruch 33 festgestellt wird, skaliert wird.

39. Fahrzeugstabilitätsausgleichssystem nach Anspruch 37 oder 38, bei dem die Heckdruckanforderung gefiltert wird, um Hochdruckfrequenzkomponenten und sehr schnelle Wechsel vom Anforderungsdrucksignal zu entfernen.

40. Fahrzeugstabilitätsausgleichssystem nach Anspruch 39, das Mittel zum Initialisieren des Filters durch einen Split-mu-Freigabemerker von dem Fahrzeug-ABS einschließt, wodurch der Anfangswert des Filters auf den momentanen Wert des gemessenen High-mu-Heckbremsdrucks festgelegt wird, um jegliche Verzögerung zu entfernen, die durch Initialisieren des Filters bei einem Wert von Null eingebracht wird.

41. Fahrzeugstabilitätsausgleichssystem nach einem der Ansprüche 37 bis 40, das Mittel zur Modifikation des ABS aufweist, um den High-mu-Heckdruck auf Anforderungsdruck zu steuern.

**Revendications**

1. Système de compensation de stabilité de véhicule qui est agencé de manière à régler dynamiquement la position d'auto-centrage et la sensation de braquage du système de direction au cours d'une opération de freinage avec coefficient de frottement, comprenant

   (a) des moyens (16) servant à établir au moins une variable opérationnelle laquelle représente un angle de braquage correcteur pour le véhicule et représente par conséquent une position d'auto-centrage cible ;
   (b) un contrôleur de rétroaction du conducteur (22, 24) qui prend l'une desdites variables opérationnelles, ou bien la somme de deux ou de plusieurs variables, lesquelles sont représentatives de la position d'auto-centrage cible, et qui soustrait de celles-ci l'angle de braquage effectif afin de pouvoir dériver une erreur d'auto-centrage cible ; et
   (c) un moyen de gain (24) servant à établir une demande de couple laquelle est proportionnelle à l'erreur d'auto-centrage cible, qui est ajoutée au couple d'assistance EAS afin de décaler la position d'auto-centrage de sorte à encourager le conducteur à déplacer le volant de manière à réduire à zéro l'erreur d'auto-centrage cible dans le but de maintenir le véhicule stable et maîtrisable.

2. Système de compensation de stabilité de véhicule, selon la revendication 1, comprenant un moyen (28) servant à établir le moment de lacet au freinage comme étant ladite variable opérationnelle représentative d'un angle de braquage correcteur.

3. Système de compensation de stabilité de véhicule, selon la revendication 2, dans lequel le moment de lacet au freinage est établi en générant et en soustrayant l'un de l'autre les estimatifs des pressions de frein au niveau des roues Avant gauche et Avant droite ; en multipliant la différence par une constante afin d'obtenir la différence dans les forces de frein pour les roues Avant ; et en divisant le résultat par la largeur de voie du véhicule.

4. Système de compensation de stabilité de véhicule, selon la revendication 3, dans lequel le moment de lacet au freinage est multiplié par un gain (34) afin de donner l'angle de braquage correcteur.

5. Système de compensation de stabilité de véhicule, selon la revendication 1, comprenant un moyen (34) servant à établir le moment d'oscillation de lacet comme étant ladite variable opérationnelle représentative d'un angle de braquage correcteur.

6. Système de compensation de stabilité de véhicule, selon la revendication 5, dans lequel le moment d'oscillation de lacet est établi par un moyen (10) qui effectue l'inversion d'un signal d'amplitude du mouvement de lacet, et qui multiplie cette valeur par un gain ($K_{yaw}$), le résultat étant utilisé en tant que signal de rétroaction lequel procure la correction de l'oscillation de lacet.

7. Système de compensation de stabilité de véhicule, selon la revendication 1, comprenant un moyen (32) servant à établir la correction de la dérive latérale comme étant ladite variable opérationnelle représentative d'un angle de braquage correcteur.

8. Système de compensation de stabilité de véhicule, selon la revendication 7, dans lequel la correction de la dérive latérale est établie en effectuant l'inversion d'un signal de l'accélération latérale du véhicule fourni par un onduleur (12) et en appliquant une compensation proportionnelle et intégrale au niveau d'un compensateur P-I (14) afin d'obtenir la correction de la dérive latérale.

9. Système de compensation de stabilité de véhicule, selon l'une quelconque des revendications 1 à 8, dans lequel ladite demande de couple, qui est proportionnelle à l'erreur d'auto-centrage cible, est ajoutée au couple d'assistance EAS par l'intermédiaire d'un limiteur (16).

10. Système de compensation de stabilité de véhicule, selon la revendication 9, incluant un moyen (36) qui permet d'appliquer la rétroaction de la vitesse de braquage pour empêcher que le décalage n'aboutisse à des oscillations de braquage insuffisamment amorties.

11. Système de compensation de stabilité de véhicule, selon la revendication 10, dans lequel la rétroaction de la vitesse de braquage fournie par ledit moyen (36) est conçue de façon à être progressivement éliminée aux vitesses faibles pour éviter de gêner les manoeuvres à faible vitesse du conducteur.

**12.** Système de compensation de stabilité de véhicule, selon la revendication 1, comprenant un moyen servant à établir la correction de l'oscillation de lacet à l'aide d'une variable opérationnelle laquelle est représentative d'une vitesse de braquage correctrice.

**13.** Système de compensation de stabilité de véhicule, selon la revendication 12, dans lequel ladite variable opérationnelle d'une vitesse de braquage correctrice est comparée à la vitesse de braquage effective et la différence est ajoutée au couple d'assistance EAS.

**14.** Système de compensation de stabilité de véhicule, selon la revendication 1, dans lequel ladite variable opérationnelle est l'amplitude du mouvement de lacet du véhicule, et dans lequel un modèle du véhicule (40) est utilisé pour générer un estimatif de l'amplitude du mouvement de lacet à partir de la vitesse du véhicule et de l'angle de braquage.

**15.** Système de compensation de stabilité de véhicule, selon la revendication 14, dans lequel ladite amplitude estimée du mouvement de lacet est soustraite de l'amplitude effective du mouvement de lacet du véhicule afin de donner une erreur de l'amplitude du mouvement de lacet.

**16.** Système de compensation de stabilité de véhicule, selon la revendication 15, dans lequel ladite erreur de l'amplitude du mouvement de lacet est acheminée à travers un compensateur (42) afin d'estimer le moment de lacet provoquant l'erreur de l'amplitude du mouvement de lacet.

**17.** Système de compensation de stabilité de véhicule, selon la revendication 16, dans lequel le moment de lacet estimé est utilisé pour modifier le comportement en lacet dudit mode du véhicule (40).

**18.** Système de compensation de stabilité de véhicule, selon la revendication 2, dans lequel le moment de lacet au freinage est généré à l'aide d'un modèle de véhicule (40) et d'un compensateur (42), conformément aux revendications 14 à 17.

**19.** Système de compensation de stabilité de véhicule, selon l'une quelconque des revendications 1 à 18, incluant un moyen (44) servant à dériver une notation d'obéissance du conducteur laquelle correspond à la résistance du conducteur à accepter les demandes de braquage additionnelles fournies par le système.

**20.** Système de compensation de stabilité de véhicule, selon la revendication 19, incluant des moyens servant à établir ladite notation d'obéissance du conducteur grâce à l'utilisation d'une table de consultation fondée sur la variable opérationnelle "couple de la colonne de direction".

**21.** Système de compensation de stabilité de véhicule, selon la revendication 19, incluant des moyens servant à établir ladite notation d'obéissance du conducteur grâce à l'utilisation d'une table de consultation fondée sur la variable opérationnelle "cadence de changement du couple de braquage du conducteur".

**22.** Système de compensation de stabilité de véhicule, selon la revendication 20 ou 21, dans lequel une combinaison de la notation d'obéissance du conducteur est établie, laquelle est fondée sur le couple de colonne de direction et la cadence de changement ou le couple de braquage du conducteur, par exemple par multiplication.

**23.** Système de compensation de stabilité de véhicule, selon l'une quelconque des revendications 2 à 8, dans lequel l'erreur de l'angle de braquage est établie en soustrayant l'angle de braquage demandé de l'angle de braquage effectif.

**24.** Système de compensation de stabilité de véhicule, selon les revendications 19 et 23, incluant des moyens servant à établir la notation d'obéissance du conducteur grâce à l'utilisation d'une table de consultation fondée sur la variable opérationnelle "erreur de l'angle de braquage".

**25.** Système de compensation de stabilité de véhicule, selon les revendications 21 et 24, dans lequel une combinaison des notations d'obéissance du conducteur est établie, lesquelles sont fondées sur la notation combinée provenant de la revendication 22 et de l'erreur de l'angle de braquage de la revendication 24.

**26.** Système de compensation de stabilité de véhicule ayant une notation d'obéissance du conducteur, selon la revendication 20 ou 24, ou bien une notation d'obéissance combinée, selon la revendication 25, qui est utilisée pour mettre à l'échelle le couple d'assistance EAS, selon la revendication 9, dans le but d'empêcher l'application d'un couple excessif.

27. Système de compensation de stabilité de véhicule, selon l'une quelconque des revendications 1 à 26, incluant des moyens servant à établir une valeur qui est représentative de la stabilité du véhicule.

28. Système de compensation de stabilité de véhicule, selon la revendication 27, dans lequel ladite valeur de stabilité de véhicule est établie grâce à l'utilisation d'une table de consultation fondée sur la variable opérationnelle "amplitude effective du mouvement de lacet".

29. Système de compensation de stabilité de véhicule, selon la revendication 27, dans lequel ladite valeur de stabilité de véhicule est établie grâce à l'utilisation d'une table de consultation fondée sur la variable opérationnelle "accélération de lacet".

30. Système de compensation de stabilité de véhicule, selon les revendications 28 et 29, dans lequel une combinaison du classement de la stabilité du véhicule est établie grâce à la combinaison de ladite amplitude effective du mouvement de lacet et de ladite accélération de lacet, par exemple par multiplication.

31. Système de compensation de stabilité de véhicule, selon la revendication 27, dans lequel ladite valeur de stabilité de véhicule est établie grâce à l'utilisation d'une table de consultation fondée sur la variable opérationnelle "angle de braquage".

32. Système de compensation de stabilité de véhicule, selon les revendications 30 et 31, dans lequel une combinaison des classements de la stabilité du véhicule est établie suite à la multiplication effectuée entre lesdits classements tels qu'ils ont été obtenus par les dispositions des revendications 30 et 31.

33. Système de stabilité de véhicule, selon la revendication 25 et la revendication 32, dans lequel la notation d'obéissance du conducteur et le classement de la stabilité du véhicule sont combinés, par exemple par multiplication.

34. Système de compensation de stabilité de véhicule, selon la revendication 1, possédant des moyens pour la variation de la décharge de la pression initiale et sensible ABS, alors que la durée d'ouverture de la vanne de décharge est fondée sur l'obéissance du conducteur, telle qu'elle est générée dans le cadre de la revendication 25, ou bien sur le classement de la stabilité du véhicule, tel qu'il est généré dans le cadre de la revendication 32, ou encore sur la combinaison des deux valeurs, selon la revendication 33.

35. Système de compensation de stabilité de véhicule, selon la revendication 1, possédant des moyens pour la variation de la rampe de pression Avant ABS à mu élevé, la durée d'application de vanne étant fondée sur l'obéissance du conducteur, telle qu'elle est générée dans le cadre de la revendication 25, ou bien sur le classement de la stabilité du véhicule, tel qu'il est généré dans le cadre de la revendication 32, ou encore sur la combinaison des deux valeurs, selon la revendication 33.

36. Système de stabilité de véhicule, selon l'une quelconque des revendications 1 à 35, possédant des moyens servant à générer une répartition estimée de la charge verticale à partir de la décélération du véhicule et des paramètres du véhicule.

37. Système de compensation de stabilité de véhicule, selon la revendication 36, incluant des moyens servant à générer une demande de pression Arrière en multipliant la pression mesurée du frein Avant à mu élevée par un rapport estimé de la charge verticale, selon la revendication 36.

38. Système de compensation de stabilité de véhicule, selon la revendication 37, dans lequel la demande de pression Arrière est mise à l'échelle grâce à la multiplication par l'obéissance du conducteur, telle qu'elle est établie dans le cadre de la revendication 25, ou bien la stabilité du véhicule, telle qu'elle est établie dans le cadre de la revendication 32, ou encore une combinaison des deux valeurs, telle qu'elle est établie dans le cadre de la revendication 33.

39. Système de compensation de stabilité de véhicule, selon la revendication 37 ou 38, dans lequel la demande de pression Arrière est filtrée afin d'éliminer - dans le signal de pression demandée - les composants de fréquence de haute pression et les changements rapides.

40. Système de compensation de stabilité de véhicule, selon la revendication 39, incluant des moyens servant à initialiser le filtre grâce à un indicateur de coefficient de frottement de validation provenant de l'ABS du véhicule, cas dans lequel la valeur initiale du filtre est réglée sur la valeur instantanée de la pression mesurée du frein Arrière à mu élevée afin d'éliminer tout retard qui a été introduit par l'initialisation du filtre à une valeur de zéro.

41. Système de compensation de stabilité de véhicule, selon l'une quelconque des revendications 37 à 40, possédant des moyens servant à modifier l'ABS afin de commander la pression Arrière à mu élevée et la faire passer à la pression demandée.

28

## FIG.1.

(1) STEERING ANGLE

(2) VEHICLE SPEED

(3) YAW RATE

(4) WHEEL PRESSURES

LATERAL ACCELERATION 30

(5)

(6) SPLIT Mu FLAG

YAW MOMENT ESTIMATION

YAW MOMENT ESTIMATE

DEMAND STEER ANGLE

YAW RATE FEEDBACK

STEER DEMAND

LATERAL DRIFT COMPENSATION 32

STEER DEMAND

(1) STEER ANGLE DEMAND

STEER ANGLE DEMAND

(4) Pb_fl

(5) Pb_fr

(6) Pb_rl

(7) Pb_rr

+ + − -K-

(2) YAW MOMENT ESTIMATE

## FIG.2.

FRONT LEFT BRAKE PRESSURE ESTIMATE $\widehat{P}_{FL}$

FRONT RIGHT BRAKE PRESSURE ESTIMATE $\widehat{P}_{FR}$

+ −

$$\frac{K_{brake}}{W_t}$$

$\delta$ YAW MOMENT

## FIG.3.

① → DELTA

STEERING ANGLE

② → SPEED

VEHICLE SPEED

M_YAW

40

r

DYNAMIC BM

→ ①

M YAW_EST.

OUT | IN

42

PID

+ −

③

YAW_RATE

**FIG.4.**

① → -K- → ①

34

YAW MOMENT
ESTIMATE

DEMAND STEER
ANGLE

**FIG.5.**

VARIABLE YAW RATE - r ——→ -1 ——→ K_YAW ——→ δ YAW OSCILLATION

10

**FIG.6.**

**FIG.7.**

DEMAND YAW RATE = 0 → + / − ACTUAL YAW RATE → PD YAW RATE CONTROL (38) → STEER RATE DEMAND LIMIT → STEER RATE DEMAND → + / − → PD STEER RATE CONTROL (40) → TORQUE LIMIT → TORQUE DEMAND

RATE GAIN ← STEERING VELOCITY

**FIG.8.**

VEHICLE LATERAL ACCEL. → [−1] (12) → P - I COMPENSATOR 14

$K_{DRIFT}$

$K_{DRIFT}$ → $\dfrac{I}{1-Z^{-1}}$ ← RESET ← SPLIT $\mu$ FLAG

→ + / + → $\delta$ LATERAL DRIFT

**FIG.9.**

1 LAT. ACC. → $K_p$ → + / + → 2 STEER DEMAND

1 SPLIT Mu FLAG → $\dfrac{1}{s}$ INTEGRATOR → $K_i$ →

FIG.10.

STEER
ANGLE
ERROR

1 STEERING ANGLE DEMAND

3 STEERING ANGLE

2 nCol  STEERING VELOCITY

4 VEHICLE SPEED

POSITION_P_GAIN

DAMPING

POSITION LOOP SPEED SCALING

1 TORQUE DEMAND

FIG.11.

1 COLUMN TORQUE

$\frac{s+1}{s+2}$

TORQUE FILTER

FILTERED TORQUE

ABS 1

(u)

DRIVER TORQUE P FEEDBACK MAP

DERIVATIVE

du/dt

RATE OF TORQUE CHANGE

ABS

(u)

DRIVER TORQUE D FEEDBACK MAP

DRIVER CO-OPERATION RATING

X

1 CO-OP 1

FIG.12.

STEER ANGLE 1

DEMANDED STEER ANGLE 2

STEER ANGLE ERROR

(u)

ABS

STEER ANGLE ERROR FEEDBACK MAP

DRIVER CO-OPERATION RATING

1 CO-OP 2

EP 1 370 468 B1

# FIG.13.

# FIG.26.

EP 1 370 468 B1

```
    1 ─────────────┐
  DEMAND           │
  TORQUE           ▼
           2 ────► X ────► 
         DRIVER          X ────► 1
        COMPLIANCE  3 ──►     TORQUE OUT
                 SPLIT Mu FLAG
```

# FIG.14.

```
    5 ──► K
         GAIN 1
STABILITY & COMPLIANCE

    1 ──────►
  FZ RATIO    X ──► X ──► IN 1
    3 ──►                        OUT 1 ──► MIN ──► 1
PB_FRONT_HIMu          FILT_START_VAL            MIN/MAX   TARGET_REAR_HIMu
                            FILTER

              1/Z

    2 ──►
  ENABLE   SWITCH
    4 ──►
PB_REAR_HIMu
```

# FIG.22.

FIG.15.

FIG.16.

FIG.17.

ABS FRONT AXLE YAW CONTROL ON SPLIT Mu
FRONT AXLE NORMAL ABS OPERATION

FIG.18.

ABS WITH DRIVER COMPLIANCE FEEDBACK

ABS BEHAVIOUR IVCS CONTROL

FIG.19.

EP 1 370 468 B1

## FIG.20.

VEHICLE SPEED → DU/DT DERIVATIVE → AX LOAD TRANSFER FZ_RATIO →

FZ_RATIO

SPLIT FLAG → ENABLE

PB_ FRONT_HIMu

PB_ REAR_HIMu

STABILITY AND COMPLIANCE → STABILITY AND COMPLIANCE

DEMAND SCALING

TARGET_ REAR_HIMu → DEMAND PRESSURE

## FIG.21.

STATIC_LOAD_F → +/+ 

STATIC_LOAD_R → +/−

AX → $(Mt^R h)/wb$ GAIN

PRODUCT → FZ_RATIO

## FIG.24.

Co-op 1

Co-op 2

→ X →

## FIG.25.

1-DCVS

DUMP TIME

→ X →

1-DCVS

OPEN TIME

→ ÷ →

FIG.23.

# ABS REAR AXLE BEHAVIOUR
## (REAR HI Mu)

FIG.27.

EP 1 370 468 B1